# EUROPEAN PATENT APPLICATION

(11) **EP 4 844 123 A1**
(43) Date of publication of application: **25.11.2026**
(21) Application number: 26177235.4
(22) Date of filing: 07.05.2026
(51) Int. Cl.: D21C 9/18, B01D 33/073, D21C 9/06

(54) **APPARATUS FOR PROCESSING PULP**

(30) Priority: 23.05.2025 SE 2530306
(71) Applicant: Valmet AB, 851 94 Sundsvall (SE)
(72) Inventor: Wetind, Ruben, 865 92 Alnö (SE)

(57) **Abstract**

Apparatus (1) for processing pulp comprising a rotatable drum (10) provided with a liquid permeable shell (14) and a plurality of longitudinal filtrate collecting channels (17a-c) inwardly of the permeable shell. At least one filtrate collecting channel (17a-c) is provided with an axially extending filtrate barrier (19a-c) defining filtrate barrier channel(s) between itself and an inner surface of the permeable shell. The filtrate barrier is provided with filtrate openings (21a-b) for liquid flow from the filtrate barrier channel to the filtrate collecting channel (17a-c). The filtrate barrier (19a-c) and its filtrate openings (21a-b) may be configured: i) such that a ratio of a first pressure drop (dP1) through the filtrate openings to a maximum pressure drop (dP2) from any position at the inner surface of the permeable shell (14) along the filtrate barrier (19a-c) to a filtrate opening being closest to said position is at least 5, and/or ii) in relation to the filtrate collecting channel (17a-c) such that a ratio of a pressure drop (dP1) for liquid passing through a filtrate opening (21a) to a pressure drop (dP3) for liquid passing along the filtrate collecting channel from the filtrate opening to an adjacent filtrate opening (21b) is at least 5.

## Description

### TECHNICAL FIELD

The present invention relates in general to apparatuses for processing pulp, and more specifically to apparatuses for washing and dewatering pulp.

### BACKGROUND

Apparatuses for processing (washing, dewatering etc.) pulp are well known in the art. One example of such apparatuses is the drum filter. Such a filter comprises a rotatable drum mounted in a vat provided with pulp suspension. The drum is provided with a liquid permeable shell forming the outer (mantle) surface of the drum. A vacuum, or at least an under-pressure, is applied on the inside of the permeable shell of the drum, causing a suction of liquid through the outer surface to axially/longitudinally extending filtrate channels provided inwardly of the liquid permeable shell. The drum filter may therefore be referred to as a vacuum drum filter. The vacuum/under-pressure causes pulp to settle onto the outer surface in the form of a pulp cake. When the drum is rotated, the pulp cake will follow the drum up from the vat and the water content in the pulp cake is reduced by further suction of liquids through the outer surface. Different washing steps can be provided along the circumference of the drum.

Another example of apparatuses for processing pulp is the twin roll press which can be used for washing and/or dewatering the (cellulosic) pulp. The twin roll press comprises two co-operating and counter-rotating press drums/rolls, each having a liquid permeable shell forming an outer (mantle) surface of the drum and being provided with filtrate channels in a corresponding manner as in drum filters. The pulp is deposited on the permeable outer surface and pressed in the roll nip, or the press nip, between the press rolls, whereby liquid is pressed out of the pulp and is displaced through the outer surface to the filtrate channels. The twin roll press may also comprise one or more washing zones prior to the press nip.

When large amounts of filtrate are involved, which is common, especially when the drum/roll has a long axial extension, rewetting is a problem that arises, i.e. that the filtrate which has been transported to the filtrate channels flows back through the permeable outer surface and dilutes the washed and/or dewatered pulp. Fig. 1 of WO2011/075041 illustrates the problem of rewetting in a twin roll press, where the rewetting primarily takes place vertically above the press nip where pulp is removed from the drums/rolls, which may be referred to as a removal zone. In a drum filter, rewetting of the pulp is highest at the sealed/removal zone, i.e. the part of the drum where the underpressure/vacuum is sealed from the drum for removal of pulp from the outer surface of the drum.

Several solutions have been proposed to solve this problem. For example, in WO2011/075041 it is proposed that the drum is provided with a filtrate barrier which defines a gap between itself and the inner surface of the permeable shell, where filtrate openings through the filtrate barrier are provided for allowing filtrate to pass from the gap to the filtrate channel only at the upper part of the filtrate channels. Thereby, filtrate is prevented to flow out from the lower part of the filtrate channels, thus reducing rewetting. A disadvantage with the proposed filtrate barrier is that the filtrate flow distribution is less than ideal in the sense that the flow through the permeable shell varies both in the axial/longitudinal and circumferential directions of the drum.

### SUMMARY

An object of the invention is to provide an apparatus for processing pulp with further improved performance, more specifically a more even flow distribution.

These and other objects are achieved by the present invention by means of an apparatus and a method according to the independent claims.

According to a first aspect of the invention, there is provided an apparatus for processing pulp comprising a drum being substantially cylindrical and being rotatable about an axis of rotation, the drum being provided with a liquid permeable shell, and a plurality of filtrate collecting channels provided inwardly of the permeable shell, which filtrate collecting channels extend longitudinally along the drum in parallel with the axis of rotation. The apparatus may be described as configured to receive pulp on an outer surface of the liquid permeable shell and to remove liquid from the pulp situated on the outer surface through the permeable shell to the filtrate collecting channels while rotating the drum in a rotational direction. At least one of the filtrate collecting channels is provided with an axially/longitudinally extending filtrate barrier which defines at least one filtrate barrier channel between itself and an inner surface of the permeable shell, wherein the filtrate barrier is provided with a plurality of filtrate openings for allowing liquid to pass from the filtrate barrier channel to the filtrate collecting channel, the plurality of filtrate openings being distributed longitudinally along the respective filtrate collecting channel.

In other words, an apparatus for processing pulp comprising a substantially cylindrical drum (which may also be referred to as a roll) is provided, the drum comprising a liquid permeable mantle surface/shell and a plurality of filtrate collecting channels provided radially inwardly of the liquid permeable shell. It is understood that the liquid permeable mantle surface or shell may comprise for example perforated metal sheets, a mesh material or other materials to achieve a durable mantle surface which can support a layer/cake of pulp thereon. The filtrate collecting channels extend longitudinally along the drum in parallel with the axis of rotation.

At least one, but advantageously each, filtrate collecting channel is provided with an axially and circumferentially extending filtrate barrier which defines a gap/space/filtrate barrier channel between itself and an inner surface of the permeable shell. The filtrate barrier is provided with a plurality of filtrate openings/through holes for allowing liquid to pass from the filtrate barrier channel to the filtrate collecting channel. The plurality of filtrate openings are distributed longitudinally along the respective filtrate collecting channel (preferably equidistantly).

The apparatus may be described as configured to receive pulp on an outer surface of the liquid permeable shell and to reduce the liquid content of the pulp situated on the outer surface by removing liquid through the permeable shell to the filtrate collecting channels while rotating the drum in a rotational direction. The apparatus may further be configured to remove pulp from the outer surface when portions thereof are disposed within a removal zone. The removal zone may be described as an angular position interval of the drum where pulp is removed from the outer surface of the drum. In a vacuum drum filter, the removal zone is at angular positions after the open/vacuum zone (where vacuum is applied) as seen in the rotational direction, the removal zone also being referred to as a sealed zone since the filtrate channels are sealed off from the vacuum in the removal/sealed zone to allow removal of the pulp. In a twin-roll press, the removal zone corresponds to an angular interval/space vertically above the press nip. The filtrate openings may be described as arranged at a vertically upper part of the filtrate collecting channel (when the filtrate collecting channel is within the removal zone) for allowing liquid to pass from the filtrate barrier channel/gap to the filtrate collecting channel. The filtrate barriers may be configured to prevent a flow of liquid from a vertically lower part of the filtrate collecting channels to the filtrate barrier channel and further through the permeable shell to the outer surface of the drum, i.e. to the pulp. The filtrate collection channels may each be defined by at least first and second axial channel walls, each wall having a substantially radial and longitudinal/axial extension, the first channel wall defining a vertically upper end of the filtrate collecting channel when said filtrate collecting channel is disposed within said removal zone. The filtrate openings may be arranged at a vertically upper part of the filtrate collecting channel in the sense that the filtrate openings are closer to the first channel wall than the second channel wall, but not necessarily in abutment with the first channel wall.

In embodiments, the filtrate barrier and its filtrate openings are dimensioned/configured such that a ratio, R1, of a first pressure drop, dP1, for liquid passing through the filtrate openings to a maximum second pressure drop, dP2, for liquid passing from any position at the inner surface of the permeable shell in the filtrate barrier channel/along the filtrate barrier to a filtrate opening being closest to said position is at least 5, such as at least 10. The dimension of the filtrate opening may refer to an effective flow area of the filtrate opening (diameter, width/length of the filtrate opening etc.). The dimension or configuration of the filtrate barrier may refer to the position of the filtrate barrier in relation to the filtrate collecting channel and/or the spacing between the filtrate barrier and the inner surface of the permeable shell and/or a shape of the filtrate barrier (bend(s), curvature etc.). It is understood that the positions of the filtrate openings and more specifically the longitudinal spacing between adjacent filtrate openings determine the distance to the closest filtrate opening for any given position. Thus, the dimension or configuration of the filtrate barrier may also comprise the positions of the filtrate openings and/or longitudinal spacing between adjacent filtrate openings.

It is understood that the first pressure drop, dP1, and the second pressure drop, dP2, result from the same flow of liquid. Thus, the filtrate barrier and its filtrate openings may be dimensioned/configured such that a ratio, R1, of a first pressure drop, dP1, for a flow of liquid passing through the filtrate openings (liquid passing at a flow rate through the filtrate openings) to a maximum second pressure drop, dP2, for said flow of liquid passing (liquid passing at the same flow rate) from any position at the inner surface of the permeable shell along the filtrate barrier to a filtrate opening being closest to said position is at least 5, such as at least 10.

The above-described embodiment can alternatively be described in that the filtrate barrier is dimensioned/configured such that, for at least one longitudinal segment of the filtrate barrier channel comprising a filtrate opening and having a longitudinal length corresponding to a longitudinal spacing (L1-L2) between the filtrate opening and an adjacent filtrate opening, a ratio, R1, of a first pressure drop, dP1, for (a flow of) liquid passing through the filtrate opening to a maximum pressure drop, dP2, for (said flow of) liquid passing from any position (within said longitudinal segment) in the filtrate barrier channel/along the filtrate barrier to the filtrate opening is at least 5, or at least 10.

A ratio R1 = dP1/dP2 >= 5, or >= 10, is advantageous since a more even flow distribution in the circumferential direction may be achieved, thereby avoiding that the pulp is dewatered unevenly as seen in the circumferential direction, and in particular avoiding that the pulp is dewatered mainly at circumferential positions where the filtrate openings are positioned ("strip-wise" in parallel with the axial direction). Even dewatering is advantageous both in terms of process efficiency (a larger portion of the circumference of the drum is used) and in terms of pulp quality (more evenly dewatered pulp is achieved).

In embodiments, the filtrate barrier (and its filtrate openings) and the filtrate collecting channel are dimensioned or configured in relation to each other such that a ratio, R2, of a first pressure drop, dP1, for liquid passing through at least one filtrate opening to a third pressure drop, dP3, for liquid passing along the filtrate collecting channel from a first longitudinal position, L1, of the filtrate opening to a second longitudinal position, L2, of an adjacent filtrate opening of the filtrate barrier is at least 5. It is understood that the third pressure drop dP3 depends on the longitudinal spacing L1-L2 between the filtrate opening and its adjacent filtrate opening. The dimension or configuration of the filtrate barrier and its filtrate openings in relation to the filtrate collecting channel may in this context refer to at least one of an effective flow area of the filtrate opening(s) (diameter, width/length of the filtrate opening etc.), a longitudinal spacing between adjacent filtrate openings in relation to an effective flow area of the filtrate collecting channel as seen in the longitudinal direction, i.e. the effective flow area (in a plane being perpendicular to the longitudinal direction) defined by the circumferential and radial extension of the filtrate collecting channel (radially inside the filtrate barrier). In embodiments, the ratio R2 is at least 10.

It is understood that the first pressure drop, dP1, and the third pressure drop, dP3, result from the same flow of liquid. Thus, the filtrate barrier (and its filtrate openings) and the filtrate collecting channel may be dimensioned or configured in relation to each other such that a ratio, R2, of the a pressure drop, dP1, for a flow of liquid passing through at least one filtrate opening (liquid passing at a flow rate through at least one filtrate opening) to a third pressure drop, dP3, for said flow of liquid passing (liquid passing at the same flow rate) along the filtrate collecting channel from a first longitudinal position, L1, of the filtrate opening to a second longitudinal position, L2, of an adjacent filtrate opening of the filtrate barrier is at least 5, such as at least 10.

A ratio R2 = dP1/dP3 >= 5, or >= 10, is advantageous since a more even flow distribution in the axial/longitudinal direction may be achieved, thereby avoiding that the pulp is dewatered unevenly as seen in the axial/longitudinal direction, and in particular avoiding that the pulp is dewatered mainly at axial/longitudinal positions where the outlets/drain pipes from the filtrate collecting channel are located (typically at the axial/longitudinal center of the drum). Even dewatering is advantageous both in terms of process efficiency (a larger portion of the axial/longitudinal length of the drum is used) and in terms of pulp quality (more evenly dewatered pulp is achieved).

In the above-described apparatus and embodiments thereof, the liquid flow in the apparatus may be 2-20 L (liter)/s, such as 2-10 L/s, per m² of outer surface of the liquid permeable shell of the drum (averaged values).

The invention is based on the insight that by dimensioning the filtrate openings, the filtrate barrier and the filtrate collecting channel in relation to each other such the pressure drop through the filtrate openings is substantially greater than i) the pressure drop along the filtrate collecting channel (R2 >= 5) and/or ii) the pressure drop along the filtrate barrier channel (R1 >= 5), the pressure drop resulting from the flow longitudinally along the filtrate collecting channel and/or the flow circumferentially along the filtrate barrier channel is almost negligible in relation to the pressure drop through the filtrate openings which means that an even flow distribution in the longitudinal/axial direction and/or in the circumferential directions is achieved. Put differently, the invention is based on the insight that the overall pressure drop is advantageously dominated by the pressure drop through the filtrate openings.

According to a second aspect of the invention, there is provided a method for dimensioning a drum for an apparatus for processing pulp, said drum being substantially cylindrical and being rotatable about an axis of rotation, the drum being provided with a liquid permeable shell, and a plurality of filtrate collecting channels provided inwardly of the permeable shell, which filtrate collecting channels extend longitudinally along the drum in parallel with the axis of rotation, wherein at least one filtrate collecting channel is provided with a longitudinally/axially extending filtrate barrier which defines at least one filtrate barrier channel between itself and an inner surface of the permeable shell, wherein the filtrate barrier is provided with a plurality of filtrate openings for allowing liquid to pass from the filtrate barrier channel to the filtrate collecting channel, the plurality of filtrate openings being distributed longitudinally along the respective filtrate collecting channel. The method comprises
- dimensioning the filtrate barrier and its filtrate openings such that a ratio, R1, of a first pressure drop, dP1, for liquid passing through the filtrate openings to a maximum pressure drop, dP2, for liquid passing from any position at the inner surface of the permeable shell along the filtrate barrier to a filtrate opening being closest to said position is at least 5, or at least 10, and/or
- dimensioning the filtrate barrier (and its filtrate openings) and the filtrate collecting channel in relation to each other such that a ratio, R2, of a pressure drop, dP1, for liquid
passing through at least one filtrate opening to a pressure drop, dP3, for liquid passing along the filtrate collecting channel from a first longitudinal position, L1, of the filtrate opening to a second longitudinal position, L2, of an adjacent filtrate opening of the filtrate barrier is at least 5, or at least 10.

In the above-described method, it is understood that the first pressure drop, dP1, and the third pressure drop, dP3, result from the same flow of liquid. It is also understood that the first pressure drop, dP1, and the third pressure drop, dP3, result from the same flow of liquid.

In embodiments, the liquid flow may be 2-20 L (liter)/s, such as 2-10 L/s, per m² of outer surface of the liquid permeable shell of the drum (averaged values).

The features of the embodiments described above are combinable in any practically realizable way to form embodiments having combinations of these features. Further, all features, properties and advantages of embodiments described above with reference to the first aspect of the invention may be applied in corresponding embodiments of the system according to the second aspect of the invention and vice versa.

### BRIEF DESCRIPTION OF THE DRAWINGS

Above discussed and other aspects of the present invention will now be described in more detail using the appended drawings, which show presently preferred embodiments of the invention, wherein:
fig. 1 illustrates an embodiment of an apparatus for processing pulp according to the invention;
fig. 2 shows parts (filtrate collecting channels, filtrate barriers) of the drum of the apparatus in fig. 1;
fig. 3 shows a detailed view of a longitudinal segment of a filtrate collecting channel shown in fig. 2, and
fig. 4 shows a graph principally showing the pressure in the filtrate barrier channel and the pressure in the filtrate collecting channel as a function of longitudinal position.

### DETAILED DESCRIPTION

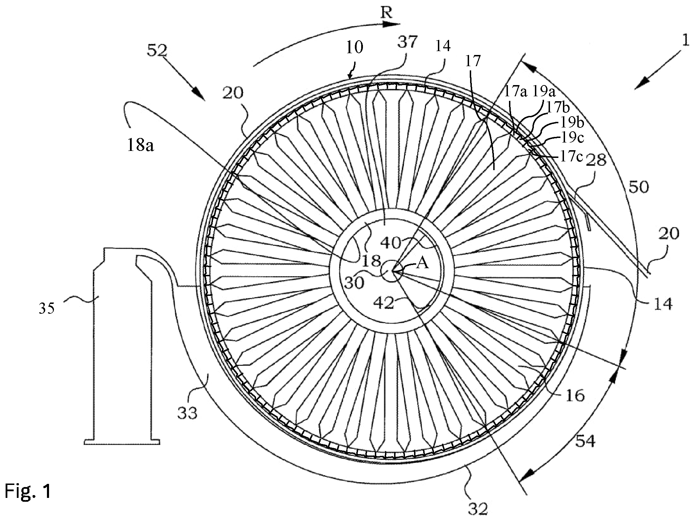

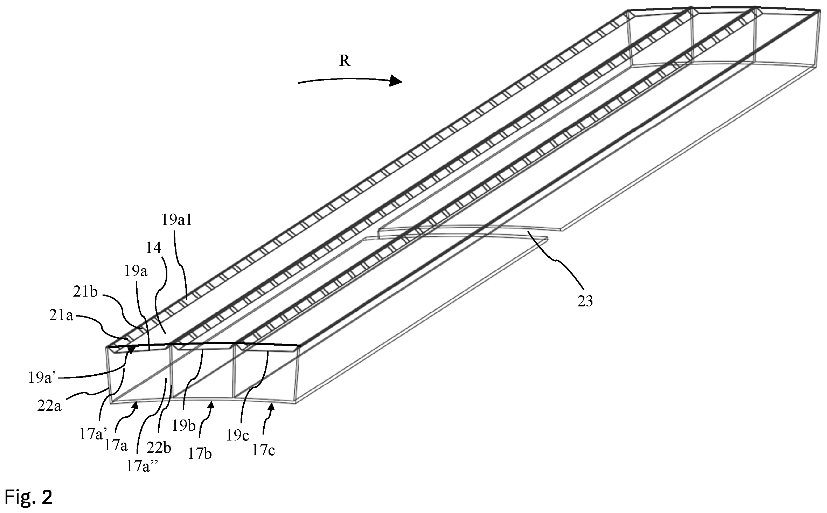

Fig. 1 illustrates a cross-sectional view of an embodiment of an apparatus 1 for processing pulp (a vacuum drum filter) according to the invention, the apparatus comprising a drum 10 which is substantially cylindrical and is rotatable about an axis of rotation A in a rotational direction R. The drum is provided with a liquid permeable shell 14 and a plurality of filtrate collecting channels (17a-c for example) provided inwardly of the liquid permeable shell, which filtrate collecting channels extend longitudinally along the drum in parallel with the axis of rotation A. Each filtrate collecting channel is provided with an axially extending filtrate barrier which defines a gap/filtrate barrier channel (19a' for example, see fig. 2) between itself and an inner surface of the permeable shell. The filtrate barrier is explained in more detail below with reference to fig. 2. The drum further comprises drain pipes (16, 17 for example), each connecting to three adjacent filtrate collecting channels (17a-c for example) to remove filtrate/liquid collected therein. In other embodiments, each drain pipe may connect to fewer filtrate collecting channels (one or two) or more filtrate collecting channels (such as four or more).

The apparatus operates as follows. A pulp source 35 provides pulp suspension 33 into the vat 32. Upon rotation of the rotatable drum 10 in the rotation direction R, pulp will settle on the liquid permeable shell, forming a pulp layer 20. This action is supported by the vacuum provided by the rotating hollow shaft 18 and the drain pipes (16, 17 for example). The vacuum is applied in an open zone 52. When the pulp layer leaves the pulp suspension 33 in the vat, the pulp layer 20 does not grow in thickness any more, but instead the vacuum can be utilized to remove parts of the liquids of the pulp. Furthermore, different washing steps (not illustrated) can be applied within the open zone 52. Such washing steps are well-known in the art and are therefore not described in further detail herein.

When a portion of the pulp layer 20 is ready to be removed, a corresponding part of the rotatable drum 10 enters into the removal/sealed zone 50. In this sealed zone 50, a non-rotating valve arrangement 30 is arranged for sealing off the hollow interior of the rotating hollow shaft 18 from the radially inner outlet of the drain pipes (16, 17 for example). This sealing off is provided when respective radially inner outlet, during rotation of the rotatable drum 10 in the rotation direction R, is situated within the sealed zone 50. In this embodiment, the sealing off is performed by the sealing plate 40, sealing against the inner surface 18a of the rotating hollow shaft 18. The take-off device 28 removes the pulp layer 20 and the bare liquid permeable shell 14 can once again be brought down in the pulp suspension 33 of the vat 32.

When the vacuum once more is applied to the inside of the liquid permeable shell 14, this is performed gradually within the transition zone 54, in order to avoid a too dense pulp web closest to the pulp-supporting shell 14. This is achieved by means of a valve plate 42 positioned against the inner surface of the rotating hollow shaft 18. The transition zone 54 is situated immediately after the sealed zone 50 in the rotation direction R.

Fig. 2 shows a detailed view of parts of the drum of the apparatus in fig. 1. More specifically, fig. 2 shows filtrate collecting channels 17a-c, filtrate barriers 19a-c, and part of the liquid permeable shell 14.

Each filtrate collecting channel 17a-c is provided with a respective longitudinally/axially and circumferentially extending filtrate barrier 19a-c which defines a filtrate barrier channel between itself and an inner surface of the permeable shell 14.

The filtrate barriers 19a-c are configured to prevent a flow of liquid from a vertically lower part 17a" of the respective filtrate collecting channel (as seen when disposed within the removal zone 50, see fig. 1) to the outer surface of the drum.

The filtrate barrier 19a-c is provided with a plurality of filtrate openings (21a-b for example) for allowing liquid to pass from the filtrate barrier channel 19a' (between 19a-c and 14) to the filtrate collecting channel 17a-c. Each filtrate collection channel 17a-c is delimited in the circumferential direction by first and second axial channel walls (22a, 22b for example) having a substantially radial and longitudinal extension. When the filtrate collecting channels are disposed within the removal zone, the first channel wall 22a defines a vertically upper end of the filtrate collecting channel. The filtrate openings are arranged at a vertical upper part (17a' for example) of the filtrate collecting channels (when disposed within said removal zone 50, see fig. 1) adjacent to the first channel wall (22a for example).

The filtrate collecting channels are further provided with an outlet 23, which in this embodiment is common for sets of three filtrate collecting channels (17a-c for example). Liquid/filtrate is drained from the filtrate collecting channels through the outlets and further to respective drain pipes (ref. 17 in fig. 1 for example).

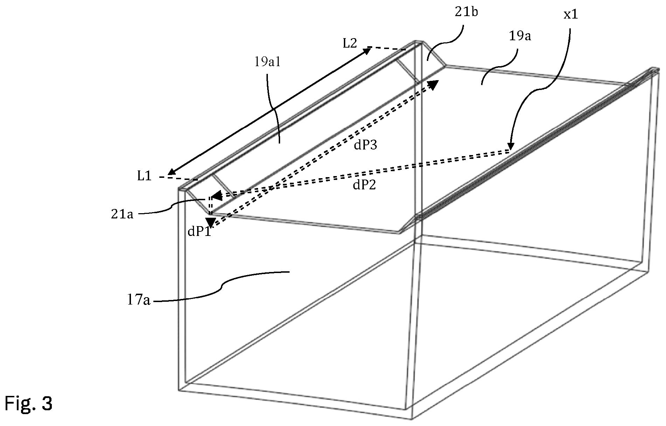

Fig. 3 shows a detailed view of a longitudinal segment of the filtrate collecting channel 17a in fig. 2. The longitudinal segment comprises the two filtrate openings 21a and 21b shown in fig. 2.

As can be seen in fig. 3 (and also in fig. 2), the filtrate barriers (19a for example) are axially bent to form two longitudinally extending bends, which protrude inwardly/towards the axis of rotation, wherein the bend separates the filtrate barrier into a first, second and third portions. The resulting "U-shape" of the filtrate barrier forms the filtrate barrier channel 19a'). The first portion 19a1 of the filtrate barrier is disposed at the upper part 17a' of the filtrate collecting channel 17a adjacent to, and in abutment with, the first channel wall 22a. The filtrate openings (21a-b for example) are formed in the first portion 19a1, but one of the edges is formed by the first channel wall 22a.

In fig. 3, the pressure drop dP1 for liquid passing through filtrate opening 21a is illustrated with an arrow. Further in fig. 3, a position x1 is illustrated which is in the filtrate barrier channel 19a' beneath the inner surface of the permeable shell (14, see fig. 1-2) being farthest away from both filtrate openings 21a-b. The maximum pressure drop dP2 (illustrated with an arrow in fig. 3) for liquid flowing in the filtrate barrier channel from any position beneath the inner surface of the permeable shell along the filtrate barrier 19a to a filtrate opening is thus the pressure drop from position x1. In fig. 3, a third pressure drop, dP3, for liquid passing along the filtrate collecting channel from the first longitudinal position L1 of filtrate opening 21a to a second longitudinal position L2 of filtrate opening 21b. As can be understood from fig. 3, the pressure drops dP1, dP2, dP3 are all caused by the same liquid flow, i.e. liquid flowing at the same flow rate. The liquid flow rate (average values) is typically 2-20 L/s (such as 2-10 L/s) per m² of outer surface of the permeable shell of the drum.

The filtrate barrier 19a and its filtrate openings 21a-b are dimensioned such that a ratio, R1, of the first pressure drop, dP1, to the maximum second pressure drop, dP2, is at least 5, preferably at least 10. More specifically, the effective flow area of the filtrate openings 21a-b (width x longitudinal length), the longitudinal spacing L2-L1 between the filtrate openings 21a-b and the position and shape (bends and portions) of the filtrate barrier 19a are dimensioned in relation to each other such that R1 >= 5.

The filtrate barrier 19a and its filtrate openings 21a-b are further dimensioned in relation to the filtrate collecting channel such that a ratio, R2, of the first pressure drop dP1 to the third pressure drop dP3 is at least 5, preferably at least 10. More specifically, the effective flow area of the filtrate openings 21a-b (width x longitudinal length), the longitudinal spacing L2-L1 between the filtrate openings 21a-b and the effective flow area of the filtrate collecting channel 17a are dimensioned in relation to each other such that R2 >= 5. It is understood that the effective flow area of the filtrate collecting channel 17a refers to the effective flow area for a flow in the longitudinal direction (in parallel with arrow dP3) in the filtrate collecting channel, which is defined by the circumferential and radial extension of the filtrate collecting channel (the effective flow area beneath filtrate barrier 19a as seen in fig. 3).

The above description concerning filtrate collecting channel 17a and filtrate barrier 19a with filtrate openings 21a-b applies mutatis mutandis to all other filtrate openings of filtrate barrier 19a and also to all other filtrate collecting channels and filtrate barriers with filtrate openings of the drum in fig. 1-2.

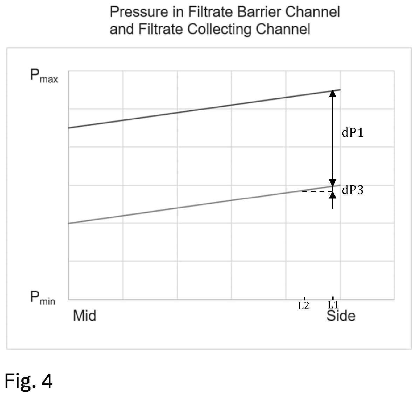

Fig. 4 shows a graph principally showing the pressure in the filtrate barrier channel 19a' and the pressure in the filtrate collecting channel 17a as a function of longitudinal position. The longitudinal position range is from a "Mid"-position (at the opening 23) to a "Side"-position (longitudinally farthest away from the opening 23, i.e. at one of the opposite longitudinal ends of the drum). The upper line illustrates the pressure in the filtrate barrier channel at the filtrate openings, i.e. the pressure drop along the filtrate barrier channel (dP2 for example) is not taken into account. The lower line illustrates the pressure in the filtrate collecting channel (beneath the filtrate barrier). As can be seen, the pressure drop dP1 through the filtrate openings is substantially constant regardless of longitudinal position. The pressure drop dP3 from position L1 (of filtrate opening 21a) to position L2 (of filtration opening 21b) is also shown in fig. 4. In this embodiment, R2=dP1/dP3 > 10.

In other embodiments, the apparatus for processing pulp is a twin roll press comprising two co-operating and counter-rotating press drum of the same type as described above. In such a twin-roll press, the pulp is deposited on the permeable outer surface and pressed in a press nip between the press rolls, whereby liquid is pressed out of the pulp and is displaced through the outer surface to the filtrate channels. The removal zone in such an embodiment corresponds to the space vertically above the press nip (where the pulp is removed/released from the rolls/drums). Twin-roll presses are well known in the art (see for example WO2011/075041) and need not be described in more detail here.

The description above and the appended drawings are to be considered as non-limiting examples of the invention. The person skilled in the art realizes that several changes and modifications may be made within the scope of the invention. For example, the filtrate openings do not need to be rectangular or positioned immediately adjacent to the filtrate collecting channel wall but can have any other shape including circular shape. As another example, the filtrate barriers can be formed differently with for example only one bend and/or protruding more or less into the respective filtrate collecting channel.

## Claims

1. An apparatus (1) for processing pulp comprising a drum (10) being substantially cylindrical and being rotatable about an axis of rotation (A), the drum being provided with a liquid permeable shell (14), and a plurality of filtrate collecting channels (17a-c) provided inwardly of the permeable shell, which filtrate collecting channels extend longitudinally along the drum in parallel with the axis of rotation,
wherein the apparatus is configured to receive pulp on an outer surface of the liquid permeable shell (14) and to remove liquid from the pulp situated on the outer surface through the permeable shell (14) to the filtrate collecting channels (17a-c) while rotating the drum in a rotational direction (R),
wherein at least one filtrate collecting channel (17a-c) is provided with a longitudinally extending filtrate barrier (19a-c) which defines at least one filtrate barrier channel (19a') between itself and an inner surface of the permeable shell (14), wherein the filtrate barrier is provided with a plurality of filtrate openings (21a-b) for allowing liquid to pass from the filtrate barrier channel to the filtrate collecting channel (17a-c), the plurality of filtrate openings (21a-b) being distributed longitudinally along the respective filtrate collecting channel,
wherein the filtrate barrier (19a-c) and its filtrate openings (21a-b) are configured such that a ratio, R1, of a first pressure drop (dP1) for a flow of liquid passing through the filtrate openings to a maximum pressure drop (dP2) for said flow of liquid passing from any position at the inner surface of the permeable shell (14) along the filtrate barrier (19a-c) to a filtrate opening being closest to said position is at least 5, and/or
wherein the filtrate barrier and its filtrate openings (21a-b) are configured in relation to the filtrate collecting channel (17a-c) such that a ratio, R2, of a pressure drop (dP1) for a flow of liquid passing through at least one filtrate opening (21a) to a pressure drop (dP3) for said flow of liquid passing along the filtrate collecting channel from a first longitudinal position (L1) of the filtrate opening to a second longitudinal position (L2) of an adjacent filtrate opening (21b) of the filtrate barrier is at least 5.

2. The apparatus according to claim 1, wherein R1 is at least 10.

3. The apparatus according to claim 1 or 2, wherein R2 is at least 10.

4. Method for dimensioning a drum for an apparatus (1) for processing pulp, said drum (10) being substantially cylindrical and being rotatable about an axis of rotation (A), the drum being provided with a liquid permeable shell (14), and a plurality of filtrate collecting channels (17a-c) provided inwardly of the permeable shell, which filtrate collecting channels extend longitudinally along the drum in parallel with the axis of rotation, wherein at least one filtrate collecting channel (17a-c) is provided with a longitudinally extending filtrate barrier (19a-c) which defines at least one filtrate barrier channel between itself and an inner surface of the permeable shell, wherein the filtrate barrier is provided with a plurality of filtrate openings (21a-b) for allowing liquid to pass from the filtrate barrier channel to the filtrate collecting channel (17a-c), the plurality of filtrate openings (21a-b) being distributed longitudinally along the respective filtrate collecting channel, the method comprising:
- dimensioning the filtrate barrier (19a-c) and its filtrate openings (21a-b) such that a ratio, R1, of a first pressure drop (dP1) for liquid passing through the filtrate openings to a maximum pressure drop (dP2) for liquid passing from any position at the inner surface of the permeable shell (14) along the filtrate barrier (19a-c) to a filtrate opening being closest to said position is at least 5, and/or
- dimensioning the filtrate barrier and its filtrate openings (21a-b) and the filtrate collecting channel (17a-c) such that a ratio, R2, of a pressure drop (dP1) for liquid passing through at least one filtrate opening (21a) to a pressure drop (dP3) for liquid passing along the filtrate collecting channel from a first longitudinal position (L1) of the filtrate opening to a second longitudinal position (L2) of an adjacent filtrate opening (21b) of the filtrate barrier is at least 5.

5. The method according to claim 4, wherein R1 is at least 10.

6. The method according to claim 4 or 5, wherein R2 is at least 10.
